# FASCICULE DE BREVET EUROPEEN

(11) **EP 2 900 114 B1**
(45) Date de publication et mention de la délivrance du brevet: **11.07.2018**
(21) Numéro de dépôt: 13774748.1
(22) Date de dépôt: 18.09.2013
(51) Int. Cl.: A47J 43/07

(54) **APPAREIL ELECTRIQUE DOMESTIQUE DE CUISSON**
ELEKTRISCHE HAUSHALTSKOCHVORRICHTUNG
HOUSEHOLD ELECTRICAL COOKING APPLIANCE

(30) Priorité: 26.09.2012 FR 1259068
(43) Date de publication de la demande: 05.08.2015
(73) Titulaire: SEB S.A., 69130 Ecully (FR)
(72) Inventeur: ALLEMAND, Bernard, 70100 Velesmes Echevanne (FR); PETITALLOT, Johann, 21310 Arceau (FR)
(74) Mandataire: Cémeli, Eric Philippe Laurent
(86) Numéro de dépôt international: PCT/FR2013/052149
(87) Numéro de publication internationale: WO 2014/049230

(56) Documents cités:
- EP-A1- 2 248 452
- EP-A1- 2 433 533
- WO-A1-2012/041660
- FR-A1- 2 769 199

## Description

La présente invention concerne de manière générale un appareil électrique de cuisson, et en particulier un tel appareil électrique comprenant un circuit électrique qu'il convient de couper par sécurité si un couvercle de cet appareil est retiré, pour arrêter le processus de cuisson électrique.

Il est connu dans l'art antérieur le document CN 201150464Y qui divulgue un cuiseur à riz avec un couvercle en deux parties. Un interrupteur est intercalé entre les deux parties du couvercle pour couper le circuit d'alimentation du cuiseur si l'utilisateur oublie de monter l'une des parties et essaye toutefois d'allumer l'appareil avec le couvercle incomplet. En contrepartie, ce système présente notamment l'inconvénient de nécessiter l'implantation d'une partie du circuit dans le couvercle, entraînant une augmentation de la complexité et du coût de l'appareil.

Le document CN 202154560U présente un four fermé par un couvercle comprenant des organes électriques. Un contacteur à pistes est intercalé entre le couvercle et le four pour permettre une coupure du circuit électrique d'alimentation si le couvercle est retiré ou mal positionné. Cet appareil présente également l'inconvénient de proposer un couvercle complexe et cher car il comporte des organes électriques et un circuit électrique pour les alimenter. Enfin, le contacteur à pistes semble présenter des parties conductrices accessibles à l'utilisateur, ce qui pose problème en termes de sécurité.

Un but de la présente invention est de répondre aux inconvénients des documents de l'art antérieur mentionnés ci-dessus et en particulier, tout d'abord, de proposer un appareil électrique de cuisson avec un couvercle simple, mais dont la sécurité d'utilisation est assurée, même si le couvercle est mal positionné ou retiré.

Pour cela un premier aspect de l'invention concerne un appareil électrique domestique de cuisson d'aliments formant une friteuse à cuisson sèche comprenant :
- un boîtier avec un réceptacle agencé pour recevoir les aliments à cuire,
- un couvercle amovible agencé pour fermer le réceptacle pendant la cuisson,
- au moins un interrupteur de sécurité agencé dans le boîtier pour ouvrir au moins un circuit électrique de l'appareil lorsque le couvercle ne ferme pas le réceptacle, et pour fermer ledit au moins un circuit électrique lorsque le couvercle ferme le réceptacle,
- une came avec au moins une surface de commande agencée pour actionner une touche de commande dudit au moins un interrupteur de sécurité selon une direction d'enfoncement de la touche de commande,
caractérisé en ce que le couvercle comprend un doigt de commande agencé pour actionner une surface d'entrée de la came selon une direction de déplacement de la surface d'entrée différente de la direction d'enfoncement :
- pendant l'ouverture du réceptacle pour ouvrir ledit au moins un circuit électrique,
- pendant la fermeture du réceptacle pour fermer ledit au moins un circuit électrique.

L'appareil selon la présente invention offre une bonne sécurité d'utilisation avec le circuit ouvert si le couvercle ne ferme pas le réceptacle et ne nécessite pas d'installer une portion du circuit électrique sur le couvercle, car c'est le doigt du couvercle qui actionne la came du boîtier pour ouvrir/fermer le circuit électrique. En d'autres termes, le couvercle ne comprend que l'organe de commande mécanique (le doigt) pour agir sur le circuit électrique du boîtier qui est distinct du couvercle. D'autre part, la présente invention offre la possibilité d'utiliser des interrupteurs de sécurité simplifiés, car la sollicitation de la touche de commande se fait dans sa direction d'enfoncement. Il n'y a pas besoin de prévoir des interrupteurs prévus pour résister à des efforts sur la touche de commande exercés dans une autre direction que celle d'enfoncement. Ce dernier type d'interrupteur (pouvant résister à un effort d'actionnement à 45° de la direction d'enfoncement par exemple) est plus onéreux que le type d'interrupteur requis par l'invention (dont l'effort d'actionnement est parallèle à la direction d'enfoncement de la touche). De plus, avec une direction de déplacement de la surface d'entrée différente de la direction d'enfoncement de la touche de commande, le concepteur de l'appareil bénéficie de plus de libertés pour implanter l'interrupteur, il n'est plus lié à la direction de déplacement de la surface d'entrée.

Selon un aspect de l'invention, le doigt de commande est agencé pour être inséré dans et sorti de l'appareil pendant la fermeture et l'ouverture du réceptacle selon une direction d'insertion et de sortie perpendiculaire à la direction de déplacement de la surface d'entrée. C'est la came, sur sa surface d'entrée, qui supporte l'effort exercé par le doigt dans une direction différente de celle du mouvement de la surface d'entrée.

Selon un aspect de l'invention, le doigt de commande présente une épaisseur prédéterminée et le déplacement de la surface d'entrée de la came selon la direction de déplacement de la surface d'entrée pour ouvrir ou fermer le circuit électrique est égal à l'épaisseur prédéterminée du doigt de commande. La course de la surface d'entrée de la came détermine la course de la surface de commande et donc la commande de l'interrupteur. Selon ce mode de réalisation, ces courses sont déterminées par l'épaisseur du doigt de commande, il en résulte que la précision de la course ne dépend que de l'épaisseur du doigt, ce qui facilite le contrôle des variabilités lors de la production en série.

Selon un aspect de l'invention, l'appareil comporte une butée fixe de guidage agencée de sorte que le doigt de commande coulisse entre la surface d'entrée de la came et la butée fixe de guidage lors de son insertion et de sa sortie de l'appareil. Le guidage est amélioré, et la butée fixe de guidage reprend les efforts exercés par la came sur le doigt, de sorte que la structure du doigt peut être simplifiée.

Selon un aspect de l'invention, le circuit électrique présente une phase et un neutre, l'appareil comprend un interrupteur de sécurité pour la phase et un interrupteur de sécurité pour le neutre, et la came comprend une surface de commande séparée pour chaque interrupteur de sécurité. Cette mise en oeuvre sécurise le circuit de phase et le circuit de neutre et offre la possibilité de déporter les deux interrupteurs l'un de l'autre.

Selon un aspect de l'invention, l'appareil comprend un axe de rotation, la came est agencée pour pivoter autour de l'axe de rotation, et les interrupteurs de sécurité et les surfaces de commande respectives de la came sont déportés angulairement et agencés dans un même plan. Cette mise en oeuvre améliore la compacité de l'appareil.

Selon un aspect de l'invention, l'appareil comprend un élément élastique agencé pour exercer sur la came une force constante qui tend à ouvrir ledit au moins un circuit électrique. Le rappel de la came en position d'ouverture du circuit électrique garantit la sécurité d'utilisation en ramenant systématiquement la came en position d'ouverture du circuit électrique. D'une manière avantageuse, le ou les interrupteur(s) de sécurité comprend(nent) lui(eux)-même(s) cet élément élastique qui assure un retour en position ouverte du circuit électrique.

Selon un aspect de l'invention, le circuit électrique est un circuit de chauffage et/ou un circuit d'alimentation d'un moteur d'entraînement en rotation d'un outil rotatif disposé dans le réceptacle.

Selon l'invention, l'appareil forme une friteuse à cuisson sèche.

Un aspect de l'invention concerne également un appareil électrique domestique de cuisson et/ou de réchauffage d'aliments, comprenant
- un boîtier avec une cuve agencée pour recevoir les aliments à cuire et/ou à réchauffer,
- un couvercle amovible agencé pour fermer la cuve pendant la cuisson et/ou le réchauffage,
- au moins un élément chauffant et un ventilateur agencés pour créer un flux fermé d'air chaud pendant la cuisson et/ou le réchauffage,
- une gaine de ventilation comprenant une entrée d'aspiration agencée sur un côté de la cuve, une sortie de ventilation au dessus de la cuve, et agencée pour diriger le flux d'air chaud sur les aliments pendant la cuisson et/ou le réchauffage, caractérisé en ce que la gaine de ventilation est monobloc et indépendante du couvercle.

L'appareil selon la présente invention propose un couvercle simple car la gaine de ventilation n'y est pas intégrée, et comme elle en est indépendante, il n'y a pas d'interaction entre le couvercle et la gaine de ventilation, de sorte que les tolérances de fabrication ne sont pas dictées par ces facteurs. Il est à noter qu'un circuit fermé pour un tel appareil signifie que la majeure partie du flux d'air est en recirculation, mais que des fuites d'air entre le couvercle et le boîtier sont possibles.

Selon un mode de réalisation, le couvercle comprend une poignée de préhension agencée sur une portion supérieure du couvercle, en regard de la gaine de ventilation, et le couvercle présente une double paroi sur la portion supérieure où est agencée la poignée de préhension. Cette mise en oeuvre de l'invention procure une bonne sécurité pour l'utilisateur contre les risques de brûlure, avec la double paroi qui isole la poignée de préhension de la chaleur rayonnée par la gaine de ventilation sur le couvercle.

Selon un mode de réalisation, la sortie de ventilation forme une surface de sortie orientée par rapport à l'horizontale d'un angle compris entre 10° et 80°. Le flux d'air est dirigé sur les aliments directement, sans perte ou remous inutiles avec la sortie de ventilation orientée vers le bas.

La cuve est montée de manière amovible dans l'appareil, et la gaine de ventilation est dimensionnée pour permettre d'insérer et de retirer la cuve de l'appareil en inclinant légèrement la cuve. La mise en place est aisée.

Selon un mode de réalisation, l'appareil comprend une paroi entourant la cuve et agencée à une distance prédéterminée de la cuve pour laisser passer le flux d'air projeté sur les aliments vers l'entrée d'aspiration de la gaine de ventilation.

Selon un mode de réalisation, le dit au moins un élément chauffant est agencé dans la gaine de ventilation, en aval du ventilateur. Cette mise en oeuvre procure un sous ensemble gaine de ventilation-élément chauffant pouvant éventuellement être fourni directement assemblé sur la ligne principale de montage.

Selon un mode de réalisation, le ventilateur est un ventilateur centrifuge qui comprend une roue à aubes agencée latéralement à la cuve, et la gaine de ventilation est agencée au dessus de la roue à aubes.

Selon un mode de réalisation, la gaine de ventilation est métallique.

Selon un mode de réalisation, l'appareil comprend un moyen de brassage pour enduire automatiquement lesdits aliments d'une pellicule de matière grasse par brassage desdits aliments avec de la matière grasse.

Selon un mode de réalisation, le moyen de brassage comprend au moins une pale agencée dans la cuve et tournant autour d'un axe de rotation.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une coupe d'une vue en perspective d'un appareil selon la présente invention ;
- la figure 2 représente une vue en coupe dans un plan parallèle au plan qui comprend les interrupteurs de sécurité de l'appareil de la figure 1.

Conformément à l'invention, l'appareil est un appareil domestique c'est-à-dire spécifiquement conçu et dimensionné pour un usage domestique, par exemple dans le cadre familial. A ce titre, l'appareil peut être manipulé à la main par son utilisateur, par exemple pour être déplacé d'un placard à un plan de travail. En d'autres termes, l'appareil présente préférentiellement un caractère portable

L'appareil conforme à l'invention est préférentiellement conçu et dimensionné pour cuire et/ou chauffer des aliments particulaires tels que des morceaux de pommes de terre.

Le concept général de l'appareil selon l'invention autorise une grande polyvalence en matière de modes de cuisson, de sorte que le terme cuire employé ici recouvre différents modes de traitement des aliments, comme par exemple la friture, le rissolage, le rôtissage, ou le brunissage.

Dans une variante préférentielle de réalisation, qui correspond aux exemples illustrés aux figures, l'appareil conforme à l'invention est préférentiellement conçu et dimensionné pour assurer un traitement thermique des aliments destinés à leur conférer des qualités gustatives sensiblement équivalentes ou proches à celles d'aliments frits. L'appareil conforme à l'invention constitue donc une friteuse à cuisson sèche. Par cuisson sèche, on désigne ici un mode de cuisson d'aliments sans immersion de ces derniers dans un bain d'huile ou de matière grasse, que cette immersion soit partielle et/ou temporaire pendant le cycle de cuisson.

L'expression cuisson sèche désigne au contraire une cuisson dans laquelle les aliments sont certes mouillés par un médium de cuisson (huile par exemple), mais sans pour autant être plongés ou baigner dans ledit médium. En cela, le principe de fonctionnement de la friteuse conforme à l'invention diffère de celui d'une friteuse classique à bain d'huile, puisqu'il permet en particulier de réunir des conditions propres à l'établissement d'une réaction de Maillard suffisante pour conférer aux aliments le caractère doré et craquant propre aux aliments frits sans que lesdits aliments n'aient pour autant été plongés complètement et directement dans un bain d'huile brûlante.

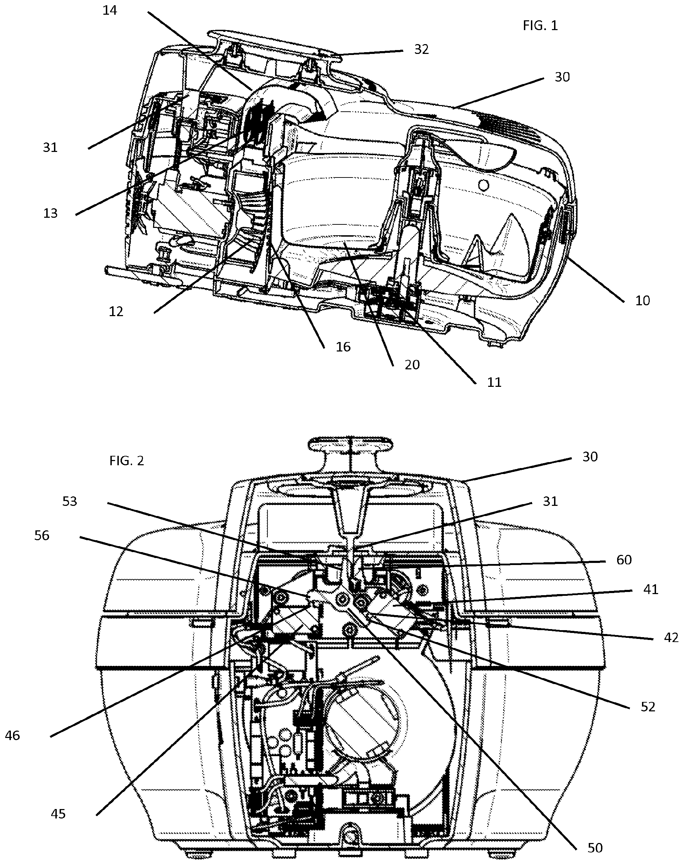

La figure 1 représente un appareil de cuisson et/ou de réchauffage d'aliments selon la présente invention, avec un boitier 10 et un couvercle 30.

Le boîtier 10 contient un réceptacle 20 fixe et agencé pour recevoir les aliments à cuire et/ou à réchauffer dans lequel est agencée une pale 15 tournante autour d'un axe de rotation et entraînée en rotation par un moteur 11, pour brasser les aliments et les enduire d'une couche de matière grasse.

Le boîtier 10 comprend également un ventilateur et une résistance chauffante 13 agencés pour créer un flux fermé d'air chaud qui sera dirigé sur les aliments dans le réceptacle 20 pour les cuire et/ou réchauffer. Le circuit de ventilation comprend une roue à aubes 12 du ventilateur qui est agencée pour aspirer à travers une grille 16 de l'air qui est situé autour du réceptacle 20, et l'envoyer vers une résistance chauffante 13, elle-même agencée dans une canalisation d'air 14. Cette dernière comporte une sortie de ventilation au dessus du réceptacle 20 orientée vers le bas, pour diriger le flux d'air expulsé vers les aliments contenus dans le réceptacle.

Le couvercle 30 est amovible par rapport au boîtier 10, c'est-à-dire qu'il peut être complètement retiré de ce dernier pour disposer les aliments dans le réceptacle ou pour les retirer de ce dernier. Afin d'être ergonomique, le couvercle 30 comprend une poignée de préhension 32 permettant une manipulation aisée.

Pour proposer une bonne ergonomie, le couvercle 30 peut être retiré sans aucune opération de déverrouillage, même lors du fonctionnement de l'appareil de cuisson et il convient dans ce dernier cas d'arrêter le fonctionnement des circuits de puissance, notamment le chauffage et le brassage des aliments pour des raisons de sécurité.

A cet effet, le couvercle 30 comporte un doigt 31 qui commande une came agissant sur des interrupteurs de sécurité 41 et 45 qui coupent des circuits électriques, comme cela sera expliqué à la figure 2.

La figure 2 représente une coupe de l'appareil de la figure 1 selon un plan parallèle au plan de fixation des interrupteurs de sécurité. L'appareil électrique représenté comprend un circuit de phase et un circuit neutre, et deux interrupteurs 41 et 45 agencés pour ouvrir ou fermer chaque circuit, de sorte que lorsque le couvercle 30 est ouvert, chaque circuit l'est également, pour couper l'alimentation des organes électriques tels que les résistances chauffantes 13, le ventilateur, et le moteur électrique 11 d'entraînement de la pale rotative.

Le couvercle 30 ferme le réceptacle 20, et le doigt de commande 31 est engagé entre la butée fixe de guidage 60 et la came mobile 50. Cette came mobile 50 est actionnée par le doigt de commande 31 au niveau de sa surface d'entrée 53 en contact avec le doigt de commande 31. Lors de la fermeture du réceptacle 20 par le couvercle 30, le doigt de commande 31 descend selon une direction d'insertion verticale entre la surface d'entrée 53 et la butée fixe de guidage 60. L'épaisseur du doigt de commande provoque une rotation de la surface d'entrée 53 dans une direction de déplacement sensiblement perpendiculaire à la direction d'insertion du doigt de commande 31. La came 50 comprend deux autres bras avec les surfaces de commande 52 et 56 chacune agencée en regard respectivement des touches de commande 42 et 46 des interrupteurs de sécurité 41 et 45 respectivement. Chaque touche de commande 42 et 46 s'enfonce selon une direction d'enfoncement, les interrupteurs de sécurité 41 et 45 et la came 50 étant agencés pour que la direction d'enfoncement de chaque touche de commande 42 et 46 des interrupteurs de sécurité 41 et 45 soit sensiblement identique à la direction de déplacement de chaque surface de commande 52 et 56 respectivement. De cette manière, les touches de commande 42 et 46 ne subissent pas d'efforts dirigés dans une autre direction que leur propre direction d'enfoncement. Cette mise en oeuvre permet d'utiliser des interrupteurs de sécurité bon marché qui n'ont pas besoin de résister à des efforts d'enfoncement de leur touche de commande dirigés dans une autre direction que celle d'enfoncement.

La came 50 comprend deux bras avec chacun une surface de commande 52 et 56, de sorte que les interrupteurs de sécurité 41 et 45 peuvent être déportés l'un de l'autre, afin de gagner en compacité et les agencer sur le même plan.

Par ailleurs, comme mentionné plus haut, c'est l'épaisseur du doigt de commande 31 qui détermine la course de déplacement de la surface d'entrée 53. Il en résulte que seule la tolérance sur l'épaisseur du doigt de commande 31 influence la course de déplacement, ce qui réduit les possibilités de dispersion.

La butée fixe de guidage 60 du doigt de commande 31 permet quant à elle de reprendre les efforts exercés par la came 50 sur le doigt de commande 31, ce qui permet d'éviter de prévoir une structure devant résister à la flexion sur le doigt de commande.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait mention d'une came rotative, mais on peut envisager d'utiliser une came de renvoi mobile en translation.

## Revendications

1. Appareil électrique domestique de cuisson d'aliments formant une friteuse à cuisson sèche comprenant :
- un boîtier (10) avec un réceptacle (20) agencé pour recevoir les aliments à cuire,
- un couvercle (30) amovible agencé pour fermer le réceptacle (20) pendant la cuisson,
- au moins un interrupteur de sécurité (41, 45) agencé dans le boîtier (10) pour ouvrir au moins un circuit électrique de l'appareil lorsque le couvercle (30) ne ferme pas le réceptacle (20), et pour fermer ledit au moins un circuit électrique lorsque le couvercle (30) ferme le réceptacle (20),
- une came (50) avec au moins une surface de commande (52, 56) agencée pour actionner une touche de commande (42, 46) dudit au moins un interrupteur de sécurité (41, 45) selon une direction d'enfoncement de la touche de commande (42, 46),
**caractérisé en ce que** le couvercle (30) comprend un doigt de commande (31) agencé pour actionner une surface d'entrée (53) de la came (50) selon une direction de déplacement de la surface d'entrée (53) différente de la direction d'enfoncement :
- pendant l'ouverture du réceptacle (20) pour ouvrir ledit au moins un circuit électrique,
- pendant la fermeture du réceptacle (20) pour fermer ledit au moins un circuit électrique.

2. Appareil selon la revendication 1, **caractérisé en ce que** le doigt de commande (31) est agencé pour être inséré dans et sorti du boîtier pendant la fermeture et l'ouverture du réceptacle (20) selon une direction d'insertion et de sortie perpendiculaire à la direction de déplacement de la surface d'entrée (53).

3. Appareil selon l'une des revendications 1 ou 2, **caractérisé en ce que** le doigt de commande (31) présente une épaisseur prédéterminée et **en ce que** le déplacement de la surface d'entrée de la came (50) selon la direction de déplacement de la surface d'entrée pour ouvrir ou fermer le circuit électrique est égal à l'épaisseur prédéterminée du doigt de commande (31).

4. Appareil selon l'une des revendications 1 à 3, **caractérisé en ce qu'**il comporte une butée fixe de guidage (60) agencée de sorte que le doigt de commande (31) coulisse entre la surface d'entrée (53) de la came (50) et la butée fixe de guidage (60) lors de son insertion et de sa sortie de l'appareil.

5. Appareil selon l'une des revendications 1 à 4, **caractérisé en ce que** le circuit électrique présente une phase et un neutre, **en ce que** l'appareil comprend un interrupteur de sécurité (41, 45) pour la phase et un interrupteur de sécurité (41, 45) pour le neutre, et **en ce que** la came (50) comprend une surface de commande (52, 56) séparée pour chaque interrupteur de sécurité (41,45).

6. Appareil selon la revendication 5, **caractérisé en ce que** l'appareil comprend un axe de rotation, **en ce que** la came (50) est agencée pour pivoter autour de l'axe de rotation, et **en ce que** les interrupteurs de sécurité (41, 45) et les surfaces de commande (52, 56) respectives de la came (50) sont déportés angulairement et agencés dans un même plan.

7. Appareil selon l'une des revendications 1 à 6, **caractérisé en ce qu'**il comprend un élément élastique agencé pour exercer sur la came (50) une force constante qui tend à ouvrir ledit au moins un circuit électrique.

8. Appareil selon la revendication 7, **caractérisé en ce que** le circuit électrique est un circuit de chauffage et/ou un circuit d'alimentation d'un moteur d'entraînement (11) en rotation d'un outil rotatif disposé dans le réceptacle (20).

## Patentansprüche

1. Elektrisches Haushaltsgerät zum Garen von Nahrungsmitteln, das eine Friteuse zum Trockengaren bildet, umfassend:
- ein Gehäuse (10) mit einem Gefäß (20), das eingerichtet ist, zu garende Nahrungsmittel aufzunehmen,
- eine abnehmbare Abdeckung (30), die eingerichtet ist, das Gefäß (20) während des Garens zu verschließen,
- mindestens einen Sicherheitsschalter (41, 45), der in dem Gehäuse (10) eingerichtet ist, um mindestens eine elektrische Schaltung des Geräts zu öffnen, wenn die Abdeckung (30) die Steckdose (20) nicht verschließt, und um mindestens eine elektrische Schaltung zu schließen, wenn die Abdeckung (30) das Gefäß (20) verschließt,
- einen Nocken (50) mit mindestens einer Steuerfläche (52, 56), der eingerichtet ist, eine Steuertaste (42, 46) des mindestens einen Sicherheitsschalters (41, 45) in einer Eindrückrichtung der Steuertaste (42, 46) zu betätigen,
**dadurch gekennzeichnet, dass** die Abdeckung (30) einen Steuerfinger (31) umfasst, der angeordnet ist, um eine Eintrittsfläche (53) des Nockens (50) in einer Bewegungsrichtung der Eintrittsfläche (53) zu betätigen, die verschieden von der Eindrückrichtung ist:
- während des Öffnens des Gefäßes (20) zum Öffnen der mindestens einen elektrischen Schaltung,
- während des Verschließens des Gefäßes (20) zum Schließen der mindestens einen elektrischen Schaltung.

2. Gerät nach Anspruch 1, **dadurch gekennzeichnet, dass** der Steuerfinger (31) eingerichtet ist, während des Schließens und Öffnens des Gefäßes (20) in einer Einführ- und Ausführrichtung senkrecht zur Bewegungsrichtung der Eintrittsfläche (53) eingeführt in das und ausgeführt aus dem Gehäuse zu werden.

3. Gerät nach einem der Ansprüche 1 oder 2, **dadurch gekennzeichnet, dass** der Steuerfinger (31) eine vorbestimmte Dicke aufweist, und dass die Bewegung der Eintrittsfläche des Nockens (50) in der Bewegungsrichtung der Eintrittsfläche zum Öffnen oder Schließen der elektrischen Schaltung gleich der vorbestimmten Dicke des Steuerfingers (31) ist.

4. Gerät nach einem der Ansprüche 1 bis 3, **dadurch gekennzeichnet, dass** es einen feststehenden Führungsanschlag (60) aufweist, der so eingerichtet ist, dass der Steuerfinger (31) zwischen der Eintrittsfläche (53) des Nockens (50) und dem feststehenden Führungsanschlag (60) während seiner Einführung und seinem Verlassen aus dem Gerät gleitet.

5. Gerät nach einem der Ansprüche 1 bis 4, **dadurch gekennzeichnet, dass** die elektrische Schaltung eine Phase und einen Nullleiter aufweist, dass das Gerät einen Sicherheitsschalter (41, 45) für die Phase und einen Sicherheitsschalter (41, 45) für den Neutralleiter umfasst, und dass der Nocken (50) eine separate Steuerfläche (52, 56) für jeden Sicherheitsschalter (41, 45) umfasst.

6. Gerät nach Anspruch 5, **dadurch gekennzeichnet, dass** das Gerät eine Drehachse umfasst, dass der Nocken (50) eingerichtet ist, um die Drehachse zu schwenken, und dass die Sicherheitsschalter (41, 45) und die jeweiligen Steuerflächen (52, 56) des Nockens (50) winkelversetzt und in einer selben Ebene angeordnet sind.

7. Gerät nach einem der Ansprüche 1 bis 6, **dadurch gekennzeichnet, dass** es ein elastisches Element umfasst, das eingerichtet ist, auf den Nocken (50) eine konstante Kraft auszuüben, die dazu tendiert, die mindestens eine elektrische Schaltung zu öffnen.

8. Gerät nach Anspruch 7, **dadurch gekennzeichnet, dass** die elektrische Schaltung ein Heizkreis und/oder ein Versorgungskreis eines Rotationsantriebsmotors (11) eines Drehwerkzeugs ist, das in dem Gefäß (20) angeordnet ist.

## Claims

1. Household electrical appliance for cooking food in the form of a dry cooking fryer, comprising:
- a housing (10) with a container (20) arranged such as to receive the food to be cooked,
- a removable cover (30) arranged such as to close the container (20) while cooking,
- at least one safety switch (41, 45) arranged in the housing (10) for turning at least one electrical circuit of the appliance on when the cover (30) is not closing the container (20), and for turning said at least one electrical circuit off when the cover (30) is closing the container (20),
- a cam (50) with at least one control surface (52, 56) arranged such as to actuate a key (42, 46) for controlling said at least one safety switch (41, 45) in a direction in which the control key (42, 46) is pressed,
**characterised in that** the cover (30) comprises a control finger (31) arranged such as to actuate a surface (53) for inputting the cam (50) in a direction for moving the input surface (53) that is different from the direction of pressing:
- said at least one electrical circuit is turned on during the opening of the container (20),
- said at least one electrical circuit is turned off during the closing of the container (20).

2. Appliance according to claim 1, **characterised in that** the control finger (31) is arranged such as to be inserted in and withdrawn from the casing during the closing and opening of the container (20), in a direction for inserting and withdrawing that is perpendicular to the direction for moving the input surface (53).

3. Appliance according to claims 1 or 2, **characterised in that** the control finger (31) has a predefined thickness and **in that** the movement of the surface for inputting the cam (50) in a direction for moving the input surface for turning the electrical circuit on or off is equal to the predefined thickness of the control finger (31).

4. Appliance according to claims 1 to 3, **characterised in that** it has a fix-mounted guide stop (60) arranged in such a way that the control finger (31) slides between the surface (53) for inputting the cam (50) and the fix-mounted guide stop (60) as it is inserted in and withdrawn from the appliance.

5. Appliance according to one of claims 1 to 4, **characterised in that** the electrical circuit has a phase and a neutral, **in that** the appliance comprises a safety switch (41, 45) for the phase and a safety switch (41, 45) for the neutral, and **in that** the cam (50) comprises a separate surface (52, 56) for controlling each safety switch (41, 45).

6. Appliance according to claim 5, **characterised in that** the appliance comprises an axis of rotation, **in that** the cam (50) is arranged such as to pivot about the axis of rotation, and **in that** the safety switches (41, 45) and the respective control surfaces (52, 56) of the cam (50) are angularly offset and arranged in a common plane.

7. Appliance according to one of claims 1 to 6, **characterised in that** it comprises an elastic element arranged such as to exert a constant force on the cam (50) that tends to turn said at least one electrical circuit on.

8. Appliance according to claim 7, **characterised in that** the electrical circuit is one of a heating circuit or a circuit for supplying power to a motor (11) for driving in rotation a rotary tool positioned in the container (20).
